# EUROPEAN PATENT APPLICATION

(11) **EP 3 574 744 A1**
(43) Date of publication of application: **04.12.2019**
(21) Application number: 19177476.9
(22) Date of filing: 30.05.2019
(51) Int. Cl.: A01G 3/08, A01G 3/04, A01D 34/44, A01D 34/47, A01G 3/053, A01G 17/02

(54) **SUCKERS REMOVING DEVICE AND RELATED SUCKERS REMOVING MACHINE**

(30) Priority: 01.06.2018 IT 201800005945
(71) Applicant: B.M.V. Di Borio Valerio & C. S.N.C., 12051 Alba (CN) (IT)
(72) Inventor: BORIO, Stefano, 12051 Alba (CN) (IT)
(74) Representative: Boario, Enrico

(57) **Abstract**

Suckers removing device (3) for suckers removing machines (2), comprising at least one actuator device (4); at least one cutting device (5), moved by said actuator device (4), adapted to cut suckers from a vegetable plant; and a protection structure (6), facing towards said at least one cutting device (5) and arranged at a predetermined minimum distance (D) from said cutting device (5) relative to a first axis (Z);
said at least one protection structure (6) being adapted to rotate idly about a first axis (Z).

Said at least one protection structure (6) comprising a plurality of protrusions (7) suitably spaced apart along the perimeter of said protection structure (6), thus defining a plurality of cavities (62) between said protrusions (7). The protrusions (7) comprised in said protection structure (6) extend along at least one axis perpendicular to said first axis (Z) by a quantity exceeding the extension of said at least one cutting device (5) along said perpendicular axis. Each cavity (62) extends along at least one axis perpendicular to said first axis (Z) by a quantity that is smaller than the extension of said at least one cutting device (5) along said perpendicular axis. Said protrusions (7) comprise: at least one first portion (72) extending along said axis (Z) by a quantity at least equal to said predetermined distance (D); and at least one striker element (74).

## Description

The present invention relates to a suckers removing device adapted to remove suckers of a vegetable plant. The present invention also relates to a suckers removing machine for removing suckers from the base of a vegetable plant, e.g. trees and/or grapevines.

The suckers removing device and the suckers removing machine according to the present invention perform the function of removing suckers or buds grown in proximity to the base of the vegetable plant, in particular the base of the trunk of the vegetable plant, without damaging the vegetable plant itself.

Cutting devices are known which comprise an idle rotary disk, arranged on one side of one or more cutting devices, the radius of which is greater than that of the cutting devices, performing a safety and protection function. Such disk is adapted to provide a striker element useful to prevent undesired objects from approaching the cutting devices, e.g. stones or trunks of a plant or any other object that should not come near the cutting devices.

Such a type of disk cannot be used for removing suckers from a vegetable plant, because it does not permit cutting suckers, which normally have a small diameter but extend quite a bit from the ground. In fact, the suckers would hit this disk without coming in contact with said cutting devices.

Suckers removing machines are also known which comprise a frame to which a suitably movable arm is connected. At the end of this arm there is a protection structure idly mounted around the shaft to which the cutting devices are connected and about which they rotate. To said protection structure a plurality of protrusions are connected, which are adapted to extend the maximum diameter of the support structure to a value exceeding the maximum diameter of the cutting devices. The same protrusions are suitably spaced apart, so as to generate cavities having a smaller diameter than the maximum diameter defined by the protrusions themselves and the diameter of the cutting devices. In this manner, suckers can enter said cavities, so that they will come in contact with the cutting devices and be removed. Likewise, when said protrusions come in contact with the plant trunk, they will in most cases prevent the cutting devices from coming in contact with the plant trunk.

However, situations may arise in operation wherein the conformation of the vegetable plant and the height of the suckers removing machine from the ground and/or the tilting angle thereof may cause part of the trunk of a vegetable plant to come in contact with the cutting devices, thus damaging the plant.

None of the solutions currently known in the art tackles the problem of how to prevent the cutting elements from coming in contact with part of the vegetable plant, whatever the plant conformation and/or the disposition of the suckers removing machine relative to the ground.

The solutions currently known in the art suffer from the drawback of leaving a non-negligible part of the suckers near the trunk base. This problem is essentially dictated by the necessity of avoiding damage to the plant, so that the suckers removing machine is kept very distant from the ground. On the other hand, if the height of the suckers removing machine from the ground were reduced, the risk of damaging the base of the plant trunk would increase considerably.

Moreover, the cutting devices are inevitably subject to wear or even breakage when they hit objects other than suckers, thus requiring more frequent maintenance.

The present invention aims at solving the problems encountered in the prior art by proposing an innovative solution that can be applied to different types of plants from which suckers need to be removed.

The solution according to the present invention permits the removal of as many suckers as possible while reducing residues to a minimum and ensuring that the plant will undergo no damage caused by the cutting elements in any operating configuration of the machine, thus preventing the cutting devices from wearing out prematurely.

One aspect of the present invention relates to a suckers removing device having the features set out in the appended claim 1.

A further aspect of the present invention relates to a suckers removing machine having the features set out in the appended claim 11.

The features and advantages of the device and machine will become clear and apparent from the following description of several possible exemplary, but non-limiting, embodiments thereof and from the following figures, wherein:
- Figure 1 shows an axonometric view of one possible embodiment of a suckers removing machine according to the present invention;
- Figure 2 shows a top view of the suckers removing machine of Figure 1;
- Figure 3 shows a sectional view of one possible embodiment of an arm of a suckers removing machine;
- Figure 4 shows one possible embodiment of the suckers removing device according to the present invention in a sectional view.

With reference to the above-listed figures, reference numeral 3 designates the suckers removing device according to the present invention. Reference numeral 2 designates as a whole a suckers removing machine, or at least a portion thereof.

The suckers removing device 3 according to the present invention is particularly suitable for being included in a suckers removing machine 2.

The suckers removing device 3 according to the present invention comprises: at least one actuator device 4; at least one cutting device 5, which is moved by said actuator device 4. Said cutting device 5 is adapted to remove, in particular cut, suckers from a vegetable plant, in particular from the base of the trunk of the vegetable plant.

The suckers removing device 3 according to the present invention further comprises at least one protection structure 6. Said protection structure 6 faces towards said at least one cutting device 5. Said protection structure 6 is arranged at a predetermined distance "D", preferably a minimum distance "D", from said cutting device 5 relative to a first axis "Z".

Said at least one protection structure 6 is adapted to rotate idly relative to the first axis "Z", in particular about said first axis "Z".

Said at least one protection structure 6 comprises a plurality of protrusions 7. Said protrusions 7 are suitably spaced apart along a perimeter of said protection structure 6, in particular the outer perimeter thereof. Said protrusions 7 are adapted to define a plurality of cavities 62 between said protrusions 7. Each cavity 62 is defined by two neighbouring protrusions 7.

In general, said protrusions 7, which are comprised in said protection structure 6, extend along at least one axis perpendicular to said first axis "Z". In particular, the assembly made up of said protection structure 6 and said protrusions 7 extends along said perpendicular axis by a quantity exceeding the extension of said at least one cutting device 5 along the same perpendicular axis. In particular, the longitudinal extension of the cutting device 5 relative to said perpendicular axis is shorter than the longitudinal extension of the assembly made up of said protrusions 7 and said protection structure 6, relative to the same perpendicular axis.

Each cavity 62 has a bottom that is distant from said first axis "Z", along at least one axis perpendicular to said first axis "Z", by a quantity that is smaller than the extension of said at least one cutting device 5 along said perpendicular axis, so that the suckers that have arrived in said cavity 62 will come in contact with said cutting device 5. In particular, the longitudinal extension of the cutting device 5 relative to said perpendicular axis is longer than the distance of the bottom of said cavity 62 from the first axis "Z", relative to said perpendicular axis.

In one possible exemplary, but non-limiting, embodiment, the bottom of said cavities 62 is defined by the very protection structure 6, so that the longitudinal extension of the cutting device 5, relative to said perpendicular axis, is longer than the longitudinal extension of said protection structure 6. Moreover, the depth of said cavities 62 is essentially defined by said protrusions 7, and in particular by the extension of the same protrusions 7 beyond the outer perimeter of the protection structure 6.

In the preferred embodiment, a plurality of said protrusions 7, more preferably each protrusion 7, comprises at least one first portion 72. Said first portion 72 extends along said axis "Z"; in particular, said first portion 72 extends along said axis "Z" by a quantity at least equal to said predetermined distance "D". In particular, said first portion 72 can fill said distance "D" between said protection structure 6 and the cutting devices 5.

In the preferred embodiment, a plurality of said protrusions 7, more preferably each protrusion 7, comprises at least one striker element 74. Said striker element 74 is adapted to soften a possible impact of the suckers removing device 3 against the vegetable plant. This saves the vegetable plant from possible damage when the suckers removing device 3, and in particular the protrusions 7, hit the vegetable plant.

In a preferred embodiment, said striker element 74 can rotate idly about an axis. The present solution makes it possible to further reduce the damages caused by impacts of the protrusions 7 against the vegetable plant.

The present invention ensures that as many suckers as possible can be removed from the plant, while reducing any sucker residues to a minimum and saving the vegetable plant from damages caused by the cutting devices 5 and/or by the protrusions 7.

As clearly shown in the annexed drawings and inferable from the present description, said protrusions 7 and said protection structure 6 do not abut against the cutting devices 5 as the cutting device 5 and the protection structure 6 move.

In the preferred, but non-limiting, embodiment of the suckers removing device 3 according to the present invention, said cutting device 5 is adapted to rotate about said first axis Z. In this embodiment, both said cutting device 5 and said protection structure 6 rotate about said first axis "Z".

Preferably, said actuator device 4 is an electric or hydraulic motor. In particular, said actuator device 4 may be directly connected to the cutting device 5; or said actuator device 4 is adapted to be connected to the shaft of the cutting device 5 through a belt 42 or equivalent motion transmission means.

In an even more preferable embodiment of the suckers removing device 3 according to the present invention, said first portion 72 of the protrusions 7 extends along said first axis "Z" by a quantity exceeding said predetermined distance "D". Therefore, said first portion 72, in addition to filling the distance "D" between the cutting device 5 and the protection structure 6 relative to the axis "Z", protrudes further outwards. The present solution makes it even more certain that most suckers will be removed from the plant, reducing any sucker residues to a minimum and giving more assurance that the vegetable plant will not be damaged by the cutting devices 5. In fact, the possibility that the vegetable plant might, before touching said protrusions 7, be hit by the cutting devices 5 undergo damage will be further reduced.

In general, said at least one cutting device 5 may be one or more disks, one or more knives, one or more hoes, or one or more mowing bars. The choice of the type of cutting device 5 may vary as a function of the characteristics of the vegetable plant and, in particular, of the characteristics of the suckers, e.g. hardness, fibrousness, etc. The embodiments illustrated in the drawings employ a circular blade adapted to rotate about said first axis "Z".

In a preferred, but non-limiting, embodiment of the suckers removing device 3, said protrusions 7 are removably fixed to said protection structure 6. Thus, the type, number and size of the protrusions 7 can be changed according to specific requirements, thereby also changing the dimensions of the cavities 62; for example, it is possible to change the characteristics of said first portion 72, the protrusions 7 and/or the striker elements 74. For example, depending on the vegetable plant from which suckers need to be removed, it is possible to vary the number and relative position of the protrusions 7 while keeping the characteristics of the cutting device 5 unchanged.

In an even more preferable embodiment of the suckers removing device 3 according to the present invention, an adjuster device 65 is comprised. Said adjuster device 65 is adapted to adjust the position of each protrusion 7 relative to said protection structure 6. In this embodiment, in addition to varying the number and characteristics of the protrusions 7, it is also possible to change their position relative to the protection structure 6, thus either increasing or decreasing the extension of the combination thereof along said perpendicular axis, e.g. in order to change the depth of said cavities 62.

The present solution permits the use of different types of cutting devices 5 with different extension along said perpendicular axis, while keeping both the protection structure 6 and the protrusions 7 unchanged. In fact, the combination made up of the protection structure 6 and the protrusions 7 allows changing the dimensions of the assembly to meet the requirements of different operating conditions, e.g. for different types of suckers and/or vegetable plants, and to adapt it in a simple and quick manner to a new cutting device 5 to be used in the suckers removing device 3.

In some possible exemplary, but non-limiting, embodiments of said protrusions 7, each protrusion 7 is so designed that said first portion 72 of each protrusion 7 comprises an inclined and/or curved portion. Such inclined and/or curved portion is adapted to fill said distance "D" between the protection structure 6 and the cutting device 5.

In one possible exemplary, but non-limiting, embodiment, said inclined and/or curved portion takes at least one C-like conformation between which the distal end of said cutting device 5, relative to said first axis "Z", lies.

In another possible embodiment (not shown), said protrusions 7 are closer to each other, e.g. join each other, on the side of the cutting device 5 opposite to that whereon said protection structure 6 is located. In yet another possible embodiment (not shown), said suckers removing device 3 comprises two protection structures 6 facing each other, between which said cutting device 5 is arranged. In such an embodiment, the protection structures 6 and the cutting devices 5 rotate about said first axis "Z", some of them being driven and others being idle. At least one of said protection structures 6 comprises a plurality of protrusions 7 according to the present invention. In a further embodiment, said two protection structures 6 are interconnected by means of said protrusions 7, which are suitably shaped for this purpose, e.g. have a C-like shape. In this latter embodiment (not shown), the two protection structures 6 are interconnected by means of said protrusions 7 and rotate integrally with each other.

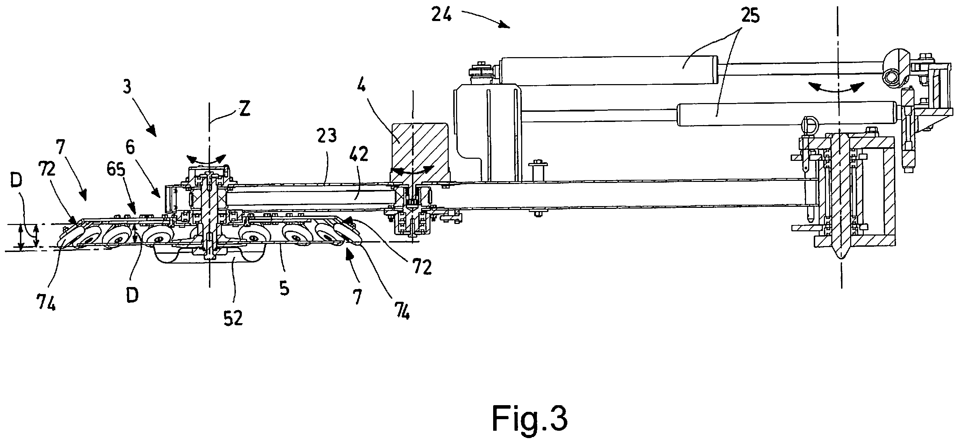

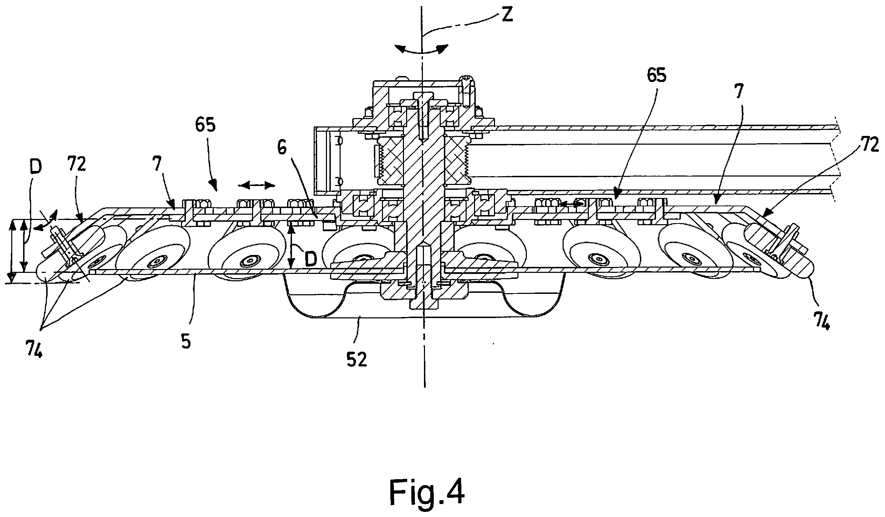

Preferably, said at least one striker element 74 is arranged at the distal end of the protrusion 7 with which it is associated. More preferably, said striker element 74 is arranged at the distal end of said first portion 72 of the protrusion 7. In particular, said first portion 72, inclusive of said striker element 74, extends along said axis "Z"; in particular, said first portion 72, inclusive of said striker element 74, extends along said axis "Z" by a quantity at least equal to said predetermined distance "D". In particular, said first portion 72, inclusive of said striker element 74, can fill said distance "D" between said protection structure 6 and the cutting devices 5. In particular, said first portion 72, inclusive of said striker element 74, extends along said axis "Z" by a quantity exceeding said predetermined distance "D". Therefore, the combination of said first portion 72 and said striker element 74, in addition to filling the distance "D" between the cutting device 5 and the protection structure 6 relative to the axis "Z", protrudes further outwards, e.g. as shown in the annexed Figures 3 and 4.

In general, said striker element 74 is adapted to abut against said vegetable plant without causing any damage thereto. In the preferred embodiment, since said striker elements 74 are idle, said striker elements 74 provide a further reduction of the impact injury when they hit the vegetable plant.

The size and shape of said striker elements 74 may change as a function of the dimensions of the cavity 62 and/or of the suckers to be removed.

In general, said striker elements 74 facilitate the entrance of the suckers into said cavity 62, so that the suckers can be removed by the cutting devices 5.

In the preferred embodiment, said striker elements 74 further promote the entrance of the suckers into said cavities 62 due to the fact that they can rotate about an axis.

In a preferred, but non-limiting, embodiment, said striker element 74 are wheels, e.g. made of plastic material.

In alternative embodiments (not shown), said striker elements 74 may comprise additional protrusions, suitably shaped, capable of further promoting the entrance of the suckers into said cavities 62, e.g. having Maltese cross shapes with suitably rounded ends.

In a further exemplary, but non-limiting, embodiment, said striker elements 74 are rigid elements made of a material having elastic properties, so as to damp the impact against the vegetable plant and save the plant from damage.

In general, said protection structure 6, which comprises said protrusions 7, being mounted idly in order to rotate about said axis "Z", permits a further reduction in the effect of the impact of the protrusions 7 against the vegetable plant.

Preferably, said protection structure 6 faces towards, and is parallel to, said cutting device 5.

The suckers removing device 3 is adapted to be comprised in a suckers removing machine 2.

Said suckers removing machine 2 is adapted to remove suckers from vegetable plants. Preferably, said suckers removing machine 2 comprises: a support structure 22; and at least one arm 23 connected to said support structure 22. Said at least one arm 23 comprises, in turn, at least one suckers removing device 3 according to the present invention.

Said suckers removing machine 2 is adapted to be associated with a vehicle, e.g. an agricultural tractor, or else it may be a self-moving machine.

Said suckers removing machine 2 may comprise two or more arms 23. At least one suckers removing device 3, preferably only one, is associated with each arm 23, preferably at the distal end of the arm 23.

The preferred embodiment of the suckers removing machine 2 comprises a drive system 24 for moving one or more arms 23. Such drive system 24 is adapted to allow the arm 23 to rotate relative to an axis parallel to said first axis "Z".

In the embodiment comprising two arms 23, such drive system 24 ensures that the two arms 23 will remain within a predefined distance range, so as to allow the two arms 23 to move away from each other, e.g. to spread apart whenever at least one vegetable plant positions itself between them. Said drive system 24 will then allow the arms 23 to get closer again, e.g. when said vegetable plant moves away from the distal end of said arms 23.

Through the use of two arms 23 it is possible to increase the suckers removal area around the vegetable plant, thus speeding up the suckers removal procedure.

In one embodiment of the suckers removing machine 2 comprising two arms 23, said drive system 24 comprises at least one actuator 25 with one end fixed to said support structure 22 and the other end fixed to an arm 23. As it moves, said at least one actuator 25 allows said arm 23 to rotate about an axis parallel to said first axis "Z". In the preferred, but non-limiting, embodiment, said drive system 24 comprises a pair of actuators 25.

The drive system 24 further comprises a return element 26, e.g. an elastic element, adapted to allow the other arm 23 to move, at least in part, in a co-ordinated manner along with the arm 23 driven by said at least one actuator 25. Said return element 26 is preferably elastic, thus allowing the arms 23 to spread apart in case of need, e.g. if a vegetable plant comes between the two arms, and then bringing them back to a predetermined distance at the end of the event that caused them to spread apart, e.g. the interposition of a vegetable plant. Said return element 26 is, for example, a coil spring.

In general, said suckers removing machine 2 comprises a control system 27 capable of changing the position of one or more arms 23 relative to the support structure 22, for the purpose of keeping said one or more arms 23 at a desired inclination. In a preferred embodiment, said control system 27 can cause two arms 23 to rotate about an axis perpendicular to said first axis "Z", under the action of one or more actuators. Said control system 27 makes it possible to adapt the suckers removing machine 2 to different conformations of the ground whereon the machine has to operate.

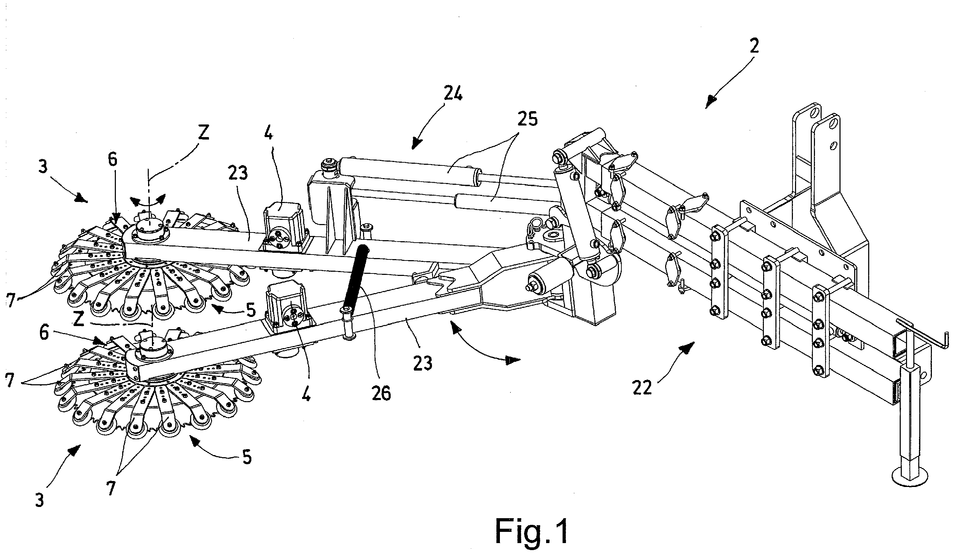

Figure 1 shows an axonometric view of one possible embodiment of the suckers removing machine 2 according to the present invention.

The embodiment shown in the drawing comprises a support structure 22 to which two arms 23 are connected, to one of which a drive system 24 is connected, the latter being suitably fixed between the arm 23 and the support structure 22. Said drive system 24 comprises two opposing actuators 25 capable of turning the arm about an axis parallel to said first axis "Z".

The second arm 23 is connected to the first arm 23 by means of a return element 26, e.g. a coil spring.

Each arm 23 comprises a suckers removing device 3, positioned at the distal end of the same arm 23.

Each suckers removing device 3 comprises a cutting device 5 beneath a protection structure 6, which is arranged at a predetermined distance from the cutting device 5. Said protection structure 6 has a discoid shape.

A plurality of protrusions 7 are fixed onto said protection structure 6.

Both said protection structure 6 and said cutting device 5 rotate about a first axis "Z". The protection structure 6 rotates idly, whereas said cutting device 5 is rotated by a respective actuator device 4.

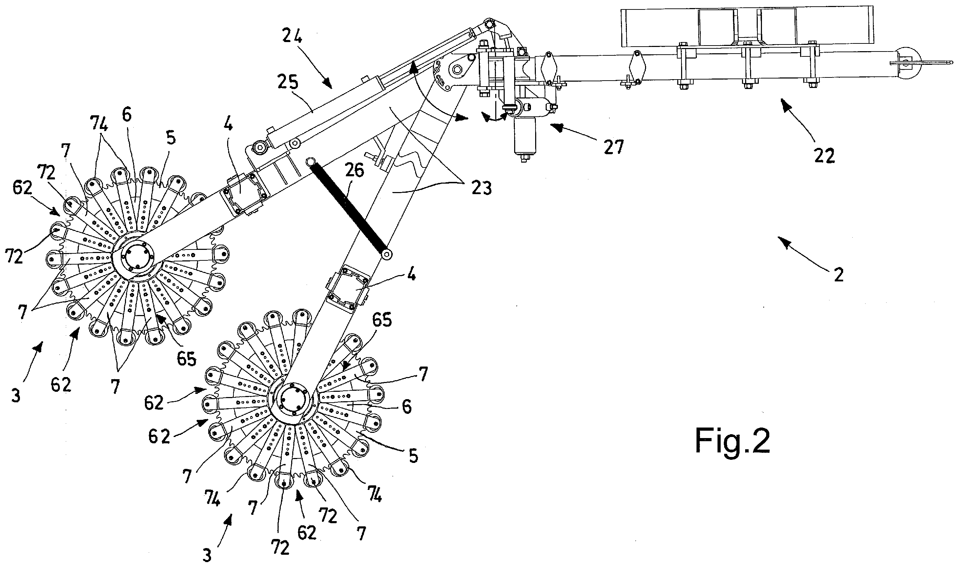

Figure 2 shows a top view of the suckers removing machine 2 of Figure 1. From this figure it is possible to better understand the relative disposition of the arms 23 and of the drive system 24 capable of moving them about an axis parallel to the first axis "Z".

Figure 2 also shows one possible embodiment of the control system 27 capable of changing the relative position of the arms 23. In particular, the control system 27 can change the position of the arms 23 relative to the support structure 22, for the purpose of keeping said arms 23 at a desired inclination. Said control system 27 is capable of cause the arms 23 to rotate relative to an axis perpendicular to said first axis "Z", through the action of one or more actuators.

Figure 2 shows one possible arrangement of the return element 26 relative to the two arms 23.

The drawing shows further details of the suckers removing device 3, and in particular the disposition of the cutting device 5 relative to the protection structure 6. A plurality of protrusions 7 are fixed to the protection structure 6.

Between the various protrusions 7 said cavities 62 are defined, in which the suckers, once they have entered the cavity 62, are removed from the vegetable plant by the cutting device 5.

Figure 2 also shows a first possible embodiment of the protrusions 7. In such an embodiment, the first portion 72 lies near a first end, in particular the distal end, of the protrusion. A striker element 74, in the form of a wheel, is connected to the first portion 72. In the present embodiment, said striker element 74 further increases the extension of the protrusions 7 relative to both said first axis "Z" and the axis perpendicular thereto.

Each suckers removing device 3 shown in the drawing comprises eighteen protrusions 7 angularly equidistant from each other. The number of and distance between the protrusions 7 is merely indicative, since their number and distance can be changed depending on specific requirements and/or the dimensions of the cutting device 5.

Figure 2 also shows one possible embodiment of the adjuster devices 65 for adjusting the position of the protrusions 7 relative to said protection structure 6.

In the illustrated embodiment, said cutting device 5 is a disk.

Figure 3 shows a sectional side view of one possible embodiment of an arm 23 of a suckers removing machine 2. This figure shows, by way of example, one possible embodiment of the drive system 24 comprising two actuators 25, in particular hydraulic pistons, adapted to allow the arm 23 to rotate about an axis parallel to said first axis "Z". The construction details will not be described herein any further because they can be easily inferred by a person skilled in the art in the light of the annexed drawings and the present description.

In the illustrated embodiment, the actuator device 4 is located in a remote position relative to the cutting device 5, e.g. in a central portion of the same arm 23.

Said actuator device 4 is connected to the cutting device 5 so as to move, in particular rotate, the latter by means of a belt or suitable equivalent motion transmission means.

The transmission shaft of the cutting device 5 is aligned with said first axis "Z", so that the cutting device 5 can turn about said first axis "Z".

At the opposite end of the shaft, i.e. the side opposite to that whereon the rotary motion is imparted, a closing plate 52 is connected , which is adapted to protect the mechanisms that allow the rotation of the cutting device 5, in addition to act as an abutment base for the suckers removing device 3 when in use.

On the same first axis "Z" said protection structure 6 is mounted, e.g. by means of bearings, so that it can rotate idly about said first axis "Z".

The figure also shows the distance "D" between the cutting device 5 and the protection structure 6.

On the protection structure, a plurality of protrusions 7 are suitably fixed by means of an adjuster device 65.

Each protrusion comprises a first portion 72, to the distal end of which a striker element is mounted.

The first portion 72, comprising said striker element 74, extends along said first axis "Z" by a quantity at least equal to, in particular greater than, said distance "D".

Figure 4 shows a sectional view of one possible embodiment of the suckers removing device 3.

This figure shows numerous construction details of the embodiment illustrated herein by way of non-limiting example.

In this figure one can see the axis "Z" about which both said cutting device 5 and said protection structure 6 rotate.

The figure also shows the distance "D" at which said protection structure 6 is arranged from the cutting device 5.

At the opposite end of the shaft, whereon the cutting device 5 is mounted, there is a suitably shaped closing plate 52. Said closing plate 52 provides an abutment point for the suckers removing device 3 and protects the mechanisms revolving about the first axis "Z".

In this figure one can also see an adjuster device 65, which is adapted to secure a single protrusion 7 to the protection structure 6. In the illustrated embodiment, said adjuster device 65 comprises a plurality of holes and fastening means, e.g. bolts, capable of fixing each protrusion 7 to the protection structure 6, with the possibility of adjusting its relative position.

The embodiment of the protrusions 7 illustrated in Figure 4 comprises a first portion 72, which is inclined relative to the portion where said adjuster device 65 is located. Preferably, the first portion 72 and the portion adapted for fixing the protrusion 7 to the protection structure 6 are distinct portions of the protrusion 7.

To one end of the first portion 72, in particular the end distal from that portion of the protrusion 7 where the adjuster device 65 is located, a striker element 74 is secured.

Said striker element 74 is, for example, an idle wheel capable of rotating about an axis.

In this figure one can see that the first portion 72, comprising said striker element 74, of which it is an integral part, extends along said axis "Z" by a quantity exceeding said distance "D".

The suckers removing device 3 according to the present invention prevents the cutting devices 5 from coming in contact with part of the vegetable plant, whatever the plant conformation and/or the disposition of the suckers removing machine 2 relative to the ground. Furthermore, the suckers removing device 3 according to the present invention makes it possible to remove as many suckers as possible while reducing residues to a minimum and extending the service life of the cutting devices 5.

**REFERENCE NUMERALS**

| | |
|---|---|
| Suckers removing machine | 2 |
| Support structure | 22 |
| Arm | 23 |
| Drive system | 24 |
| Actuators | 25 |
| Return element | 26 |
| Control system | 27 |
| Suckers removing device | 3 |
| Actuator device | 4 |
| Belt | 42 |
| Cutting device | 5 |
| Closing plate | 52 |
| Protection structure | 6 |
| Cavity | 62 |
| Adjuster device | 65 |
| Plurality of protrusions | 7 |
| First portion | 72 |
| Striker element | 74 |
| Distance | "D" |
| First axis | "Z" |

## Claims

1. Suckers removing device (3) for suckers removing machines (2), comprising:
- at least one actuator device (4);
- at least one cutting device (5), moved by said actuator device (4), adapted to remove suckers from a vegetable plant;
- at least one protection structure (6), facing towards said at least one cutting device (5) and arranged at a predetermined distance (D) from said cutting device (5) relative to a first axis (Z);
said at least one protection structure (6) being adapted to rotate idly about a first axis (Z);
said at least one protection structure (6) comprising a plurality of protrusions (7) suitably spaced apart along a perimeter of said protection structure (6), thus defining a plurality of cavities (62) between said protrusions (7);
said protrusions (7) extend along at least one axis perpendicular to said first axis (Z) by a quantity exceeding the extension of said at least one cutting device (5) along said perpendicular axis;
each cavity (62) having a bottom that is distant from said first axis (Z), along at least one axis perpendicular to said first axis (Z), by a quantity that is smaller than the extension of said at least one cutting device (5) along said perpendicular axis, so that the suckers that have arrived in said cavity (62) will come in contact with said cutting device (5);
**characterized in that** said protrusions (7) comprise at least one first portion (72) extending along said axis (Z) by a quantity at least equal to said predetermined distance (D) ;
each protrusion (7) comprising at least one striker element (74) adapted to soften a possible impact of the suckers removing device (3) against the vegetable plant.

2. Suckers removing device (3) according to claim 1, wherein said at least one striker element (74) can rotate idly about an axis.

3. Suckers removing device (3) according to one of the preceding claims, wherein:
- said cutting device (5) is adapted to rotate about said first axis (Z);
- said actuator device (4) is an electric or hydraulic motor.

4. Suckers removing device (3) according to one of the preceding claims, wherein said first portion extends along said first axis (Z) by a quantity exceeding said predetermined distance (D).

5. Suckers removing device (3) according to one of the preceding claims, wherein said at least one cutting device (5) is one or more disks, one or more knives, one or more hoes, or one or more mowing bars.

6. Suckers removing device (3) according to one of the preceding claims, wherein said protrusions (7) are removably fixed to said protection structure (6).

7. Suckers removing device (3) according to claim 6, comprising an adjuster device (65) adapted to adjust the position of each protrusion (7) relative to said protection structure (6).

8. Suckers removing device (3) according to one of the preceding claims, wherein said first portion (72) comprises an inclined and/or curved portion.

9. Suckers removing device (3) according to claim 8, wherein said inclined and/or curved portion takes at least one C-like conformation between which the distal end of said cutting device (5) lies.

10. Suckers removing device (3) according to claim 1, wherein at least one striker element (74) is arranged at the distal end of each protrusion (7).

11. Suckers removing machine (2) adapted to remove suckers from vegetable plants;
said suckers removing machine (2) comprises:
- a support structure (22);
- at least one arm (23) connected to said support structure (22) ;
said at least one arm (23) comprising at least one suckers removing device (3) according to one of the preceding claims.
